# EUROPÄISCHE PATENTSCHRIFT

(11) **EP 0 605 750 B1**
(45) Veröffentlichungstag und Bekanntmachung des Hinweises auf die Patenterteilung: **02.04.1997**
(21) Anmeldenummer: 93100231.5
(22) Anmeldetag: 08.01.1993
(51) Int. Cl.: A47J 42/12, A47J 31/42, A47J 42/50, B02C 7/18

(54) **Kaffeemaschine**
Coffee brewer with grinding device
Cafetière équipée d'un moulin

(43) Veröffentlichungstag der Anmeldung: 13.07.1994
(73) Patentinhaber: WMF WÜRTTEMBERGISCHE METALLWARENFABRIK AG, 73304 Geislingen (DE)
(72) Erfinder: Anderl, Siegfried, W-7341 Amstetten (DE)
(74) Vertreter: Grünecker, Kinkeldey, Stockmair & Schwanhäusser Anwaltssozietät

(56) Entgegenhaltungen:
- EP-A- 0 380 450
- CH-A- 431 840
- DE-B- 1 090 937
- DE-C- 192 173
- FR-A- 2 565 088

## Beschreibung

Die Erfindung bezieht sich auf eine Kaffeemaschine der im Oberbegriff von Anspruch 1 erläuterten Art.

Eine derartige Kaffeemaschine ist aus der EP-A-424 326 bekannt. Die bekannte Kaffeemaschine ist zum Bereiten von einer oder mehreren Sorten Kaffee ausgelegt und weist für jede Kaffeesorte einen eigenen Vorratsbehälter und eine eigene Dosiereinrichtung für Kaffeebohnen auf. Allen Vorratsbehältern ist eine gemeinsame Mühle zugeordnet. Die Mühle weise zwei senkrecht übereinander angeordnete, gezähnte Mahlscheiben auf, zwischen denen ein horizontaler Mahlspalt ausgebildet ist. Die obere Mahlscheibe steht fest, während die untere Mahlscheibe um eine senkrechte Achse rotiert. Die obere Mahlscheibe weist im Bereich der senkrechten Drehachse eine Einfüllöffnung auf, die in einen zwischen beiden Mahlscheiben ausgebildeten und in Richtung auf den außenliegenden Mahlspalt spitz zulaufenden Aufnahmehohlraum mündet. Das Mahlwerk steht über jeweils nur eine Auslaßöffnung für Kaffeemehl mit einer einzigen Brüheinrichtung in Verbindung. Jede der Dosiereinrichtungen umfaßt eine Kammer mit einer oberen Öffnung, durch die die Kaffeebohnen in die Kammer fallen, und eine seitliche Öffnung, durch die die Kaffeebohnen mit einem Schieber ausgestoßen werden können.

Im Betrieb der bekannten Kaffeemaschine wird der der gewünschten Sorte entsprechende Vorratsbehälter geöffnet und die gewünschte Dosis Kaffeebohnen in die Dosierkammer der zugeordneten Dosiereinrichtung eingebracht. Der Vorratsbehälter wird wieder verschlossen und die Dosis Kaffeebohnen mit Hilfe des Schiebers aus der Dosierkammer ausgestoßen, so daß sie durch die Einfüllöffnung in den Aufnahmehohlraum des Mahlwerks gelangen. Durch die konisch nach außen abfallende Bodenausbildung und mitdrehenden Flügeln werden die Bohnen in Richtung des sich außen verengenden Mahlspalts gelenkt. Sie werden von den an der Innenseite der Mahlringe tief eingeschnittenen Vorbrecherzähnen erfaßt und grob zerteilt. Soweit Bohnen oder Bohnenbruchstücke beim Aufprall auf einen rotierenden Zahn dabei eine Beschleunigung in Drehrichtung erfahren, werden sie in den zunehmend enger werdenden und mit größerer Zähneanzahl bestückten Mahlspalt getragen und dabei in immer feinere Teile zermahlen. Der äußerste Mahlspalt mit der größten Anzahl feinster Zähne bestimmt letztendlich die endgültige Mahlfeinheit. Die Mahlgeschwindigkeit entspricht der Drehzahldifferenz zwischen feststehender oberer und rotierender unterer Mahlscheibe. Um eine zu starke Erwärmung des Kaffeemehls und den damit verbundenen Aromaverlust zu vermeiden, darf jedoch die Mahlgeschwindigkeit nicht zu hoch sein.

Normalerweise erfolgt die Dosierung der vorbestimmten Kaffeemehlmenge für eine vorgewählte Portion Kaffeegetränk bei Ein-Sorten-Mahlwerken über die Betriebsdauer des Mahlwerks, wobei die Kaffeebohnen laufend in das Mahlwerk nachrutschen, d.h. es wird Kaffeemehl dosiert, wobei das Mahlwerk solange läuft, bis (nach einer Eichung) die vorbestimmte Menge Kaffeemehl ausgegeben wurde. Dabei werden die jeweils zu mahlenden Kaffeebohnen durch das Gewicht der nachfolgenden Bohnen in den Mahlspalt gedrückt. Infolge des gefüllten Aufnahmehohlraums können weder ganze Bohnen noch Bohnenbruchstücke zur Drehachse hin ausweichen. Bei der bekannten Kaffeemaschine, bei der ein einziges Mahlwerk verschiedene Sorten Kaffee mahlen muß, müssen hingegen die Kaffeebohnen dosiert werden und das Mahlwerk muß in der Lage sein, die dosierte Menge Kaffeebohnen bis zum letzten Rest zu vermahlen, so daß der Aufnahmeraum vor dem Zudosieren einer zweiten Sorte Kaffee vollständig geleert ist. Dies wird bei der bekannten Kaffeemaschine dadurch erreicht, daß das Mahlwerk vor dem Einfüllen der Kaffeebohnen in Betrieb gesetzt wird und nach dem Vermahlen noch eine gewisse Zeit nachläuft. Selbst wenn jedoch das vollständige Leeren des Aufnahmehohlraums bei der bekannten Kaffeemaschine gelingt, dauert das Mahlen jedoch sehr lange. Dies liegt daran, daß insbesondere die letzten zu vermahlenden Kaffeebohnen oder Bohnenbruchstücke erst mehr oder weniger von den Zähnen und Wänden des Aufnahmehohlraums reflektiert werden, d.h. im Aufnahmehohlraum "herumspringen", bevor sie endgültig in den Mahlspalt gezogen werden. Eine längere Mahlzeit bedeutet jedoch auch eine längere Zeit zwischen dem Einleiten eines Brühzyklus und demjenigen Zeitpunkt, an dem das fertiggebrühte Getränk entnommen werden kann, was äußerst nachteilig ist.

Aus der EP-A-380 450 ist eine Kaffeemaschine mit einem Mahlwerk bekannt, die in der Lage ist, mehr als eine Sorte Kaffee zu mahlen und zu brühen. Das Mahlwerk ist entweder mit einem Sensor für die Stromaufnahme des Mahlwerksmotors oder mit einer Detektiervorrichtung für die letzte Bohne im Mahlwerk versehen, so daß sichergestellt wird, daß das Mahlwerk erst dann abgeschaltet wird, wenn die letzte Bohne der eindosierten Menge an Kaffeebohnen gemahlen wurde.

Die CH-A-431 840 beschreibt eine Kaffeemühle mit einem Mahlwerk aus zwei übereinanderliegenden Mahlscheiben. Die untere Mahlscheibe ist um eine vertikale Achse drehbar angetrieben, während die obere Mahlscheibe feststeht. Die Zufuhr der Kaffeebohnen erfolgt durch die Mitte der oberen, feststehenden Mahlscheibe. An dieser Stelle ist die untere, rotierende Mahlscheibe mit einer nach oben weisenden Nabe versehen, von der sich Rippen radial nach außen bis zum Mahlspalt erstrecken. Diese Rippen haben die Aufgabe, die in das Mahlwerk einfallenden Kaffeebohnen den Zahnkränzen der Mahlscheiben zuzuführen und sie daran zu hindern, im Inneren der Mahlscheiben leerlaufend mitzurotieren. Die Rippen stellen somit eine Art Leiteinrichtung dar, die die Bohnen auf direktem Weg vom Zufuhrbereich in den Mahlspalt leiten sollen. Die auf die Bohnen einwirkende Zentrifugalkraft wird durch die mit Mahlgeschwindigkeit rotierende und demgemäß vergleichsweise langsam laufende drehbare Mahlscheibe erzeugt.

Die FR-A-2 565 088 beschreibt eine Dosiereinrichtung für Kaffeebohnen, die mit einem Mahlwerk verbunden ist. Das Mahlwerk weist übereinanderliegende Mahlscheiben auf, von denen die untere angetrieben ist und die obere feststeht. Durch das Mahlwerk erstreckt sich eine Leitschnecke, die mit der drehbaren Mahlscheibe gedreht wird. Diese Leitschnecke soll das Fördern der Kaffeebohnen in Richtung auf den Mahlspalt erleichtern. Auch hier wird die auf die Kaffeebohnen einwirkende Fliehkraft allein durch die mit Mahlgeschwindigkeit rotierende, untere Mahlscheibe erzeugt.

Der Erfindung liegt somit die Aufgabe zugrunde, auf konstruktiv einfache Weise eine Kaffeemaschine mit Kaffeebohnendosierung und einer verringerten Brühzyklusdauer zu schaffen.

Die Aufgabe wird durch die kennzeichnenden Merkmale des Anspruchs 1 gelöst.

Durch den erfindungsgemäß vorgesehenen Zentrifugalkraftverstärker wird auf konstruktiv einfache Weise auf die Bohnen ein zusätzlicher Druck ausgeübt, der sie zügig, effektiv, aber schonend durch den Mahlspalt drückt. Das "Herumspringen" insbesondere der letzten Kaffeebohnen einer Dosiermenge im Aufnahmehohlraum wird dadurch vermieden.

Ein Ausführungsbeispiel eines Zentrifugalkraftbeschleunigers ist in den Ansprüchen 2 bis 7 beschrieben. Da in diesem Ausführungsbeispiel beide Mahlwerksteile angetrieben werden und sich die Mahlgeschwindigkeit somit aus der Differenz der beiden Geschwindigkeiten ergibt, kann zumindest eines der Mahlwerksteile mit einer gegenüber herkömmlichen Mahlwerken gleichen Typs wesentlich vergrößerten Geschwindigkeit umlaufen, so daß die auf die Kaffeebohnen einwirkenden Zentrifugalkräfte wesentlich erhöht werden können, ohne daß das Kaffeemehl durch eine zu hohe Mahlgeschwindigkeit unzulässig hoch erwärmt wird. Darüber hinaus erfährt die Kaffeebohne beim Aufprallen auf jedes der beiden Mahlwerksteile neben der Rückprallkraft gleichzeitig eine Drehbeschleunigung um die Rotationsachse. Diese bewirkt durch die gleichzeitig einwirkende Zentrifugalkraft einen stumpferen Abprallwinkel. Die Kaffeebohne springt nicht mehr im gesamten Aufnahmehohlraum hin und her, sondern bewegt sich weitgehend nur zwischen den beiden Mahlwerksteilen im spitz zulaufenden Teil des Aufnahmehohlraums, wobei sie rasch zum Mahlspalt gelangt.

Diese Bewegung der Kaffeebohnen kann noch durch verschiedene Leiteinrichtungen bzw. Leitkörper gemäß den Ansprüchen 5 bis 7 optimiert werden.

Eine weitere Ausgestaltung eines als Zentrifugalkraftversträkers ausgebildeten Beschleunigers ist in den Ansprüchen 8 bis 13 beschrieben.

Durch die Ausgestaltung des Vorratsbehälters gemäß den Ansprüchen 14 bis 16 wird die Zugriffszeit zu verschiedenen Sorten Kaffeebohnen bzw. die Förderzeit der Kaffeebohnen in das Mahlwerk und somit die Dauer des Brühzyklus weiter verringert. Darüber hinaus wird dadurch die Konstruktion vereinfacht und, im Ausführungsbeispiel gemäß Anspruch 15, für den Kunden die Möglichkeit geschaffen, Sortenanzahl und Bevorratungsmenge gemäß seinen speziellen Wünschen einzustellen.

Die in den Ansprüchen 17 und 18 beschriebene Dosiereinrichtung sorgt obenfalls für eine kurze Zugrifffszeit bzw. kurze Transportwege für die Kaffeebohnen.

Durch die Ausgestaltung nach den Ansprüchen 19 und 20 kann die Zeit für einen Brühzyklus weiter verkürzt werden, da beispielsweise bereits in der zweiten Brüheinrichtung gebrüht werden kann, während der ausgelaugte Kaffeesatz aus der ersten Brüheinrichtung entfernt wird.

Ausführungsbeispiele der Erfindung werden nachfolgend anhand der Zeichnungen näher erläutert. Es zeigt:
- Fig. 1: eine schematische Darstellung einer erfindungsgemäßen Kaffeemaschine,
- Fig. 2: einen Längsschnitt durch einen Teil der Kaffeemaschine aus Fig. 1,
- Fig. 3: ein weiteres Ausführungsbeispiel eines Mahlwerks,
- Fig. 4: die Draufsicht auf Fig. 3,
- Fig. 5: den Schnitt V-V aus Fig. 1 in vergrößerter Darstellung,
- Fig. 6: einen vergrößerten Längsschnitt durch die Dosiereinrichtung,
- Fig. 7: eine Draufsicht auf die Dosiereinrichtung nach Fig. 6,
- Fig. 8: einen Längsschnitt ähnlich Fig. 2 durch ein weiteres Ausführungsbeispiel, und
- Fig. 9: den Schnitt IX-IX aus Fig. 8.

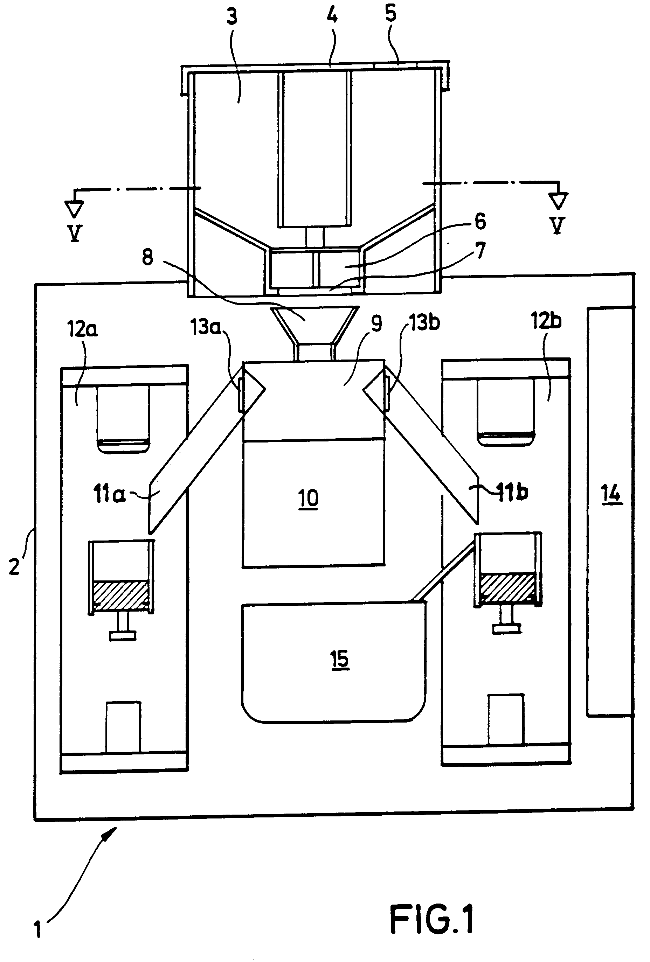

Aus Fig. 1 ist in schematischer Darstellung eine Kaffeemaschine 1 mit einem Gehäuse 2 ersichtlich. Oben auf dem Gehäuse 2 sitzt ein Vorratsbehälter 3 für Kaffeebohnen, der mit einem verdrehbaren Deckel 4 abgedeckt ist, in den eine verschließbare Einfüllöffnung 5 ausgebildet ist. Unterhalb des Vorratsbehälters 3 befindet sich eine Dosiereinrichtung 6 mit einer Austrittsöffnung 7. Die Austrittsöffnung 7 mündet in das Innere des Gehäuses 2 und fluchtet mit einem Einfülltrichter 8 einer Kaffeemühle 9, die durch einen Motor 10 angetrieben werden kann.

Die Kaffeemühle 9 steht über zwei Ausgabeschächte 11a, 11b mit jeweils einer herkömmlichen Brüheinrichtung 12a, 12b derart in Verbindung, daß das in der Kaffeemühle 9 gemahlene Kaffeemehl wahlweise in die entsprechend zugeordnete Brüheinrichtung 12a, 12b übergeleitet werden kann. Die Ausgabeschächte 11a, 11b sind an der Mühle 9 mit jeweils einem Schieber 13a, 13b zu öffnen und zu schließen, wobei die Schieber 13a, 13b, wie auch die übrigen Verfahrensschritte des automatisch ablaufenden Brühzyklus, über eine Steuerung 14 betätigt werden können. Im Gehäuse 2 ist weiterhin ein Behälter 15 für den ausgelaugten Kaffeesatz untergebracht.

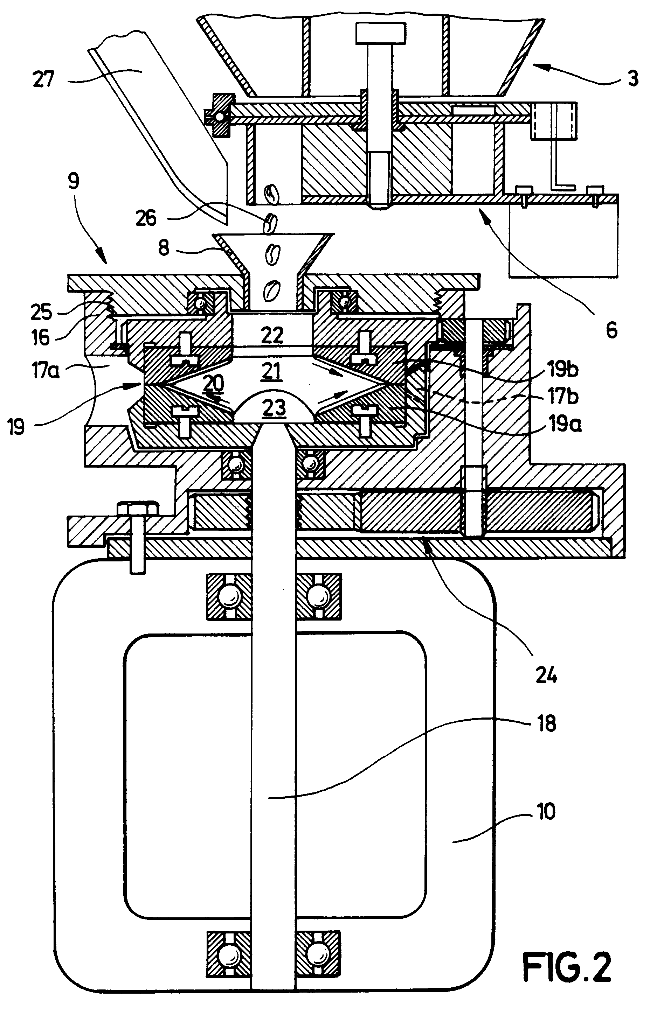

Wie Fig. 2 zeigt enthält die Mühle 9 ein Gehäuse 16, das an gegenüberliegenden Seiten durch im wesentlichen horizontal verlaufende Austrittsöffnungen 17a, 17b durchbrochen ist, die in die Ausgabeschächte 11a bzw. 11b münden. Von unten her tritt in das Gehäuse 16 eine Antriebswelle 18 zum Antrieb eines Mahlwerks 19 vom Motor 10 ein. Auf der Antriebswelle 18 sitzt ein unteres Mahlwerksteil in Form einer Mahlscheibe 19a. Oberhalb der Mahlscheibe 19a und koaxial mit ihr ist ein zweites Mahlwerksteil in Form einer Mahlscheibe 19b angeordnet, die mit der ersten Mahlscheibe einen spitz zulaufenden Mahlspalt 20 und einen Aufnahmehohlraum 21 bildet. Der Aufnahmehohlraum 21 steht über einen sich durch die obere Mahlscheibe 19b erstreckende Einfüllöffnung 22 mit dem Einfülltrichter 8 in Verbindung, wobei sich die obere Mahlscheibe 19b bis zur Einfüllöffnung 22 erstreckt. Der Einfülltrichter 8, die Einfüllöffnung 22 und das Mahlwerk 19 mit den Mahlwerksteilen 19a, 19b, dem Mahlspalt 20 und dem Aufnahmehohlraum 21 sind koaxial mit der Antriebswelle 18 ausgebildet.

In den Aufnahmehohlraum 21 erstreckt sich weiterhin von unten her eine Leiteinrichtung in Form eines teilkugelförmigen Leitkörpers 23 als Teil des unteren Mahlwerksteils 19a, der ebenfalls symmetrisch zur Drehachse der Antriebswelle 18 ausgebildet ist.

Von der Antriebswelle 18 wird über ein Untersetzungsgetriebe 24 mit einer Reihe von Zahnrädern der Antrieb für die obere Mahlscheibe 19b abgeleitet. Dabei wird die untere Mahlscheibe 19a mit einer Geschwindigkeit angetrieben, die weit über der erforderlichen Mahlgeschwindigkeit liegt. Die Untersetzung ist so gewählt, daß die zweite, obere Mahlscheibe 19b gleichsinnig zur ersten, unteren Mahlscheibe 19a jedoch mit einer Geschwindigkeit angetrieben wird, die der um die Mahlgeschwindigkeit verringerten Geschwindigkeit der unteren, ersten Mahlscheibe 19a entspricht. Bevorzugt läuft die untere Mahlscheibe 19a mit 1400 U/min und die obere Mahlscheibe 19b mit 400 bis 700 U/min um. Am Gehäuse 16 kann weiterhin über ein Einstellgewinde 25 der Feinheitsgrad des Mahlwerks 19 reguliert werden.

Die durch den Einfülltrichter 18 und die Einfüllöffnung 22 in den Aufnahmehohlraum 21 einfallenden Kaffeebohnen 26 gelangen zunächst auf die rotierende Oberfläche des sehr schnell rotierenden Leitkörpers 23, erfahren dort eine Drehbeschleunigung und werden durch Zentrifugalkräfte nach außen in den Mahlspalt 20 getragen. Falls sie an die obere Mahlscheibe 19b anprallen, erfahren sie auch dadurch eine weitere Drehbeschleunigung, so daß auch die letzten einfallenden Bohnen 26 im wesentlichen auf direktem Weg durch den Mahlspalt 20 getragen werden. Durch die wesentlich schneller als bei üblichen Mahlwerken umlaufende, untere Mahlscheibe 19a und die ebenfalls und gleichsinnig, wenn auch mit geringerer Geschwindigkeit, umlaufende, obere Mahlscheibe 19b wird somit ein wirksamer Beschleuniger für die Kaffeebohnen geschaffen, durch den es möglich ist, die vordosierte Menge Kaffeebohnen in etwa der gleichen Zeit zu mahlen, wie dies möglich wäre, wenn die eingefüllten Kaffeebohnen unter dem Druck nachfolgender Kaffeebohnen stehen würden.

Zusätzlich zu der noch zu beschreibenden Dosiereinrichtung 6 ist in Fig. 2 eine Einfüllrutsche 27 gezeigt, die zum Einfüllen von Kaffeebohnen per Hand, beispielsweise für Verkostungen oder dgl., in den Trichter 8 mündet.

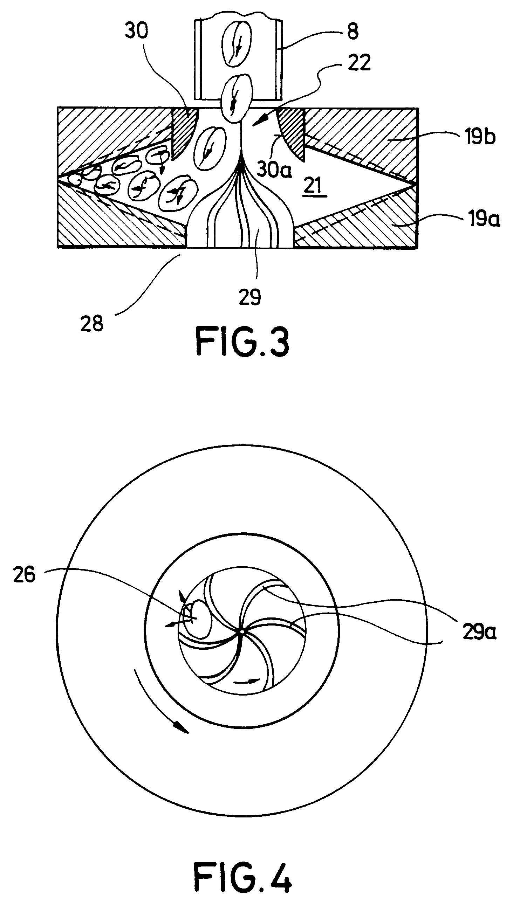

Anstelle des teilkugelförmigen Leitkörpers 23 kann die in den Fig. 3 und 4 dargestellte, abgewandelte Leiteinrichtung 28 vorgesehen werden. Die Leiteinrichtung 28 enthält einen zusammen mit der schnell umlaufenden Mahlscheibe 19a auf der Antriebswelle 18 sitzenden, geflügelten Leitkörper 29, der entgegen seiner Drehrichtung nach hinten abgewinkelte Drehschaufeln 29a aufweist. Die Drehschaufeln 29a haben zueinander einen ausreichend großen Abstand, daß Kaffeebohnen 26 zwischen sie hineinfallen können. In Richtung auf die Einfüllöffnung 22 laufen alle Drehschaufeln 29a in einer Leitspitze aus. Die Leiteinrichtung 28 weist weiterhin einen Leitring 30 auf, der sich rund um die Einfüllöffnung 22 erstreckt und mit der oberen Mahlscheibe 19b umläuft. Der Leitring 30 hat einen etwa dreieckigen Querschnitt mit einer nach innen weisenden, abgerundeten Fläche und einer in den Aufnahmehohlraum 21 hineinreichenden Spitze, die im Bereich 30a geriffelt ist.

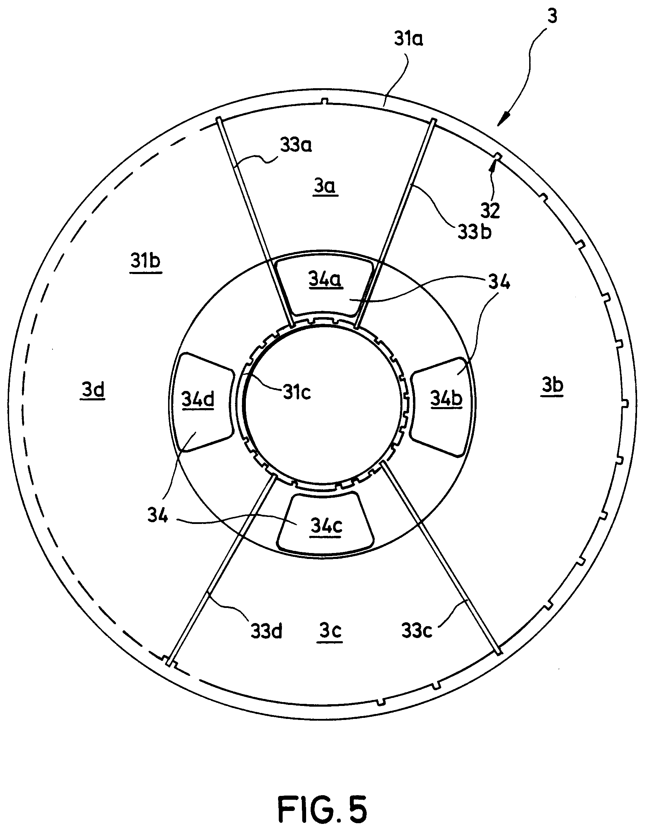

Der Vorratsbehälter 3 ist, wie die Fig. 1 und 5 zeigen, eine im wesentlichen zylindrische Seitenwand 31a und einen trichterförmigen Boden 31b. Der trichterförmige Boden 31b endet an einer ebenfalls zylindrischen Innenwandung 31c, die sich bis zum Deckel 4 erstreckt. Sowohl in der äußeren zylindrischen Wandung 31a als auch in der inneren zylindrischen Wandung 31c sind Nuten 32 vorgesehen, in die radial von innen nach außen verlaufende Trennwände 33, von denen lediglich 4 Trennwände 33a, 33b, 33c und 33d dargestellt sind, eingeschoben werden können. Der Boden 31b weist in der Nähe der inneren zylindrischen Wandung 31c Austrittsöffnungen 34 auf, von denen vier Austrittsöffnungen 34a, 34b, 34c, 34d dargestellt sind, die gleichmäßig um den Umfang der inneren zylindrischen Wandung 31c verteilt sind. Wenn feststeht, daß eine oder mehrere der Kaffeesorten in größeren Mengen gebraucht werden wird, können die Austrittsöffnungen auch ungleichmäßig verteilt werden. Wie Fig. 5 zeigt, kann der Vorratsbehälter 3, je nach Anordnung der Trennwände 33, in stark unterschiedlich große Abteile 3a, 3b, 3c und 3d für vier Sorten Kaffeebohnen unterteilt werden. Bei Bedarf können auch mehr als vier Austrittsöffnungen vorgesehen und die jeweils nicht benötigten durch Stopfen oder dgl. verschlossen werden. Auch können einsetzbare Leitbleche verwendet werden, um auch bei einer assymmetrisch zum zugeordneten Vorratsbehälterabteil angeordnete Austrittsöffnung das vollständige Leeren dieses Abteils zu gewährleisten.

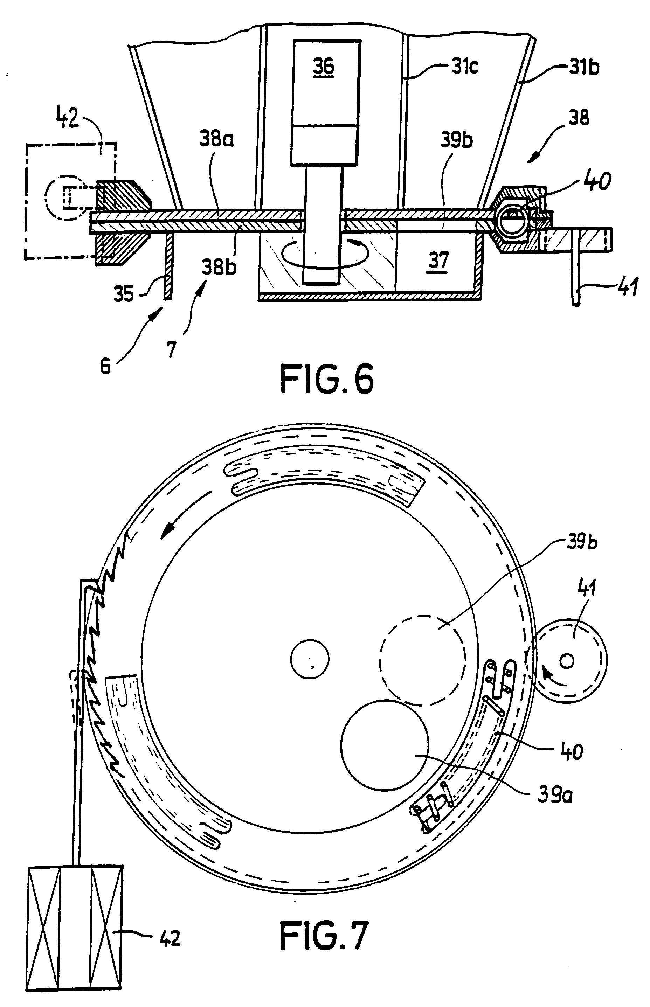

Die Austrittsöffnungen 34 des Vorratsbehälters 3 können wahlweise mit der in den Fig. 6 und 7 näher dargestellten Dosiereinrichtung 6 in Verbindung gebracht werden. Die Dosiereinrichtung 6 weist ein relativ zum Vorratsbehälter 3 feststehendes Gehäuse 35 auf, das mit der Ausgabeöffnung 7 der Dosiereinrichtung 6 versehen ist. Im Inneren des Gehäuses 35 wird über einen Motor 36, der zweckmäßigerweise innerhalb der innere zylindrischen Wandung 31c des Vorratsbehälters 3 untergebracht ist, wenigstens eine Dosierkammer 37 um eine senkrechte Achse verdreht. Die Dosierkammer ist nach oben und unten offen, wobei ihr gesamter Querschnitt dem Querschnitt der Auslaßöffnung 7 entspricht. Zwischen dem Gehäuse 35 und den Auslaßöffnungen 34 des Vorratsbehälters 3 ist eine Schließeinrichtung 38 angeordnet. Die Schließeinrichtung 38 enthält eine obere Scheibe 38a und eine untere Scheibe 38b, die jeweils mit einer Durchlaßöffnung 39a bzw. 39b versehen sind. Die Öffnungen 39a, 39b sind jeweils im gleichen Abstand zur Mitte der jeweiligen Scheiben angeordnet und gleich groß, wobei ihre Größe auch etwa der Größe der Dosierkammer 37 entspricht. In Normalstellung sind die beiden Scheiben 38a, 38b derart aufeinandergelegt, daß ihre Öffnungen 39a, 39b nahe beieinander liegen, sich jedoch nicht überlappen. Diese Stellung ist durch eine Feder 40 fixiert.

Beide Scheiben 38a, 38b können über einen Schrittmotorantrieb 41 gemeinsam und koaxial mit der Dosierkammer 37 relativ zum Vorratsbehälter 3 verdreht werden. Über einen Zug- oder Druckmagneten 42 können die beiden Scheiben gegen die Kraft der Feder 40 aber auch relativ zueinander derart verdreht werden, daß ihre Öffnungen 39a, 39b miteinander fluchten.

Soll eine bestimmte Sorte Kaffeebohnen aus einem der Abteile 3a bis 3d des Vorratsbehälters 3 dosiert werden, so wird zunächst die Schließeinrichtung 38, d.h. beide Scheiben 38a, 38b, mit Hilfe des Schrittmotorantriebs 41 so weit verdreht, bis die Durchlaßöffnung 39b der unteren Scheibe 38b mit der Auslaßöffnung 34 des ausgewählten Abteils des Vorratsbehälters fluchtet. Anschließend wird mit Hilfe des Zug- oder Druckmagnets 42 die obere Scheibe 38a relativ zur unteren Scheibe 38b gegen die Kraft der Feder 40 so weit verdreht, daß ihre Durchlaßöffnung 39a mit der Durchlaßöffnung 39b und damit auch mit der Auslaßöffnung 34 des ausgewählten Abteils des Vorratsbehälters 3 fluchtet. Bewegt sich dann durch Betätigen des Motors 36 die Dosierkammer 37 bzw. eine Mehrzahl Dosierkammern 37 vorbestimmter Größe unter die fluchtenden Öffnungen 34, 39a und 39b, so wird die Dosierkammer 37 mit der vorbestimmten Menge Kaffeebohnen gefüllt. Beim weiteren Verdrehen der Dosierkammer 37 gelangt diese über die Auslaßöffnung 7, so daß die Kaffeebohnendosis in den Einfülltrichter 8 der Mühle 9 fällt.

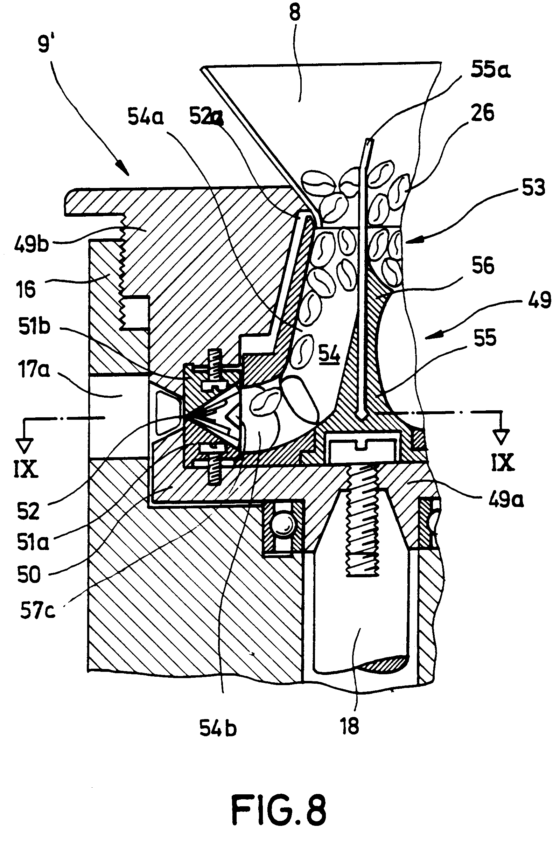

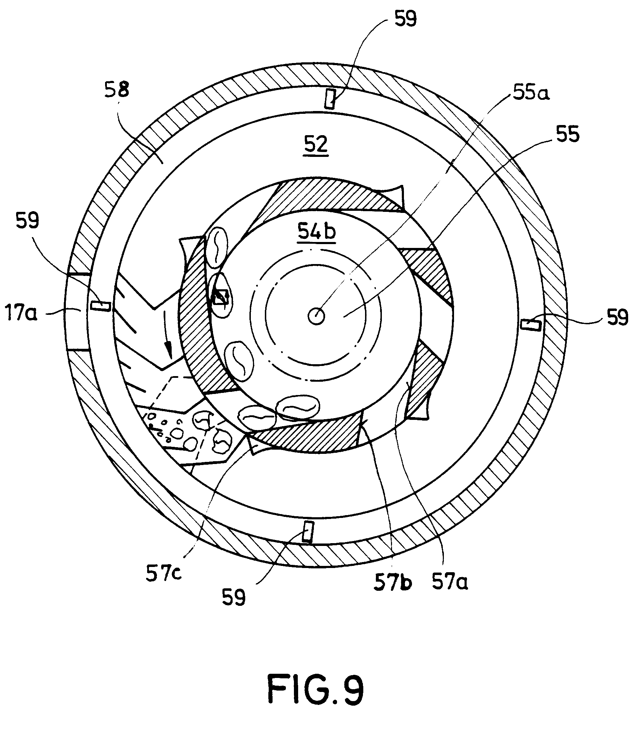

In den Fig. 8 und 9 ist ein weiteres Ausführungsbeispiel einer Mühle 9' beschrieben, wobei gleiche bzw. vergleichbare Bauteile mit den gleichen Bezugszeichen versehen und nicht nochmals erläutert sind. Auch die Mühle 9' ist unterhalb eines Einfülltrichters 8 angeordnet und enthält ein Gehäuse 16, das an gegenüberliegenden Seiten durch im wesentlichen horizontal verlaufende Austrittsöffnungen durchbrochen ist, wobei lediglich eine der Austrittsöffnungen 17a gezeigt ist. Auch die Austrittsöffnungen der Fig. 8 münden in die Ausgabeschächte 11a bzw. 11b. In das Gehäuse 16 tritt von unten her eine Antriebswelle 18 vom Motor 10 ein.

Auf der Antriebswelle 18 sitzt ein erstes Mahlwerksteil 49a eines Mahlwerks 49. Das Mahlwerksteil 49a enthält einen Träger 50 und einen ersten, mit nach oben weisender Mahlfläche auf dem Träger 50 befestigten Mahlring 51a, dem ein mit nach unten weisender Mahlfläche, unter Ausbildung eines Mahlspaltes 52, senkrecht darüber angeordneter, zweiter Mahlring 51b gegenüberliegt. Der zweite Mahlring 51b ist fest mit einem zweiten Mahlwerksteil 49b verbunden, das wiederum im Gehäuse 16 derart angeordnet ist, daß es von der Antriebswelle 18 nicht verdreht wird. Das zweite Mahlwerksteil 49b kann jedoch über ein Gewinde mehr oder weniger tief in das Gehäuse 16 eingeschraubt werden, um die Größe des Mahlspaltes 52 einzustellen. Durch das zweite Mahlwerksteil 49b erstreckt sich eine Einfüllöffnung 52a, die eine Verbindung zwischen dem oberhalb des Gehäuses 16 angeordneten Einfülltrichter und dem unterhalb des Einfülltrichters 8 befindlichen Mahlspalt 52 herstellt.

Mit dem Träger 50 und damit mit der Antriebswelle 18 ist ein Bohnenleitkanal 53 verbunden, der sich innerhalb der Einfüllöffnung 52a vom Einfülltrichter 8 zum Mahlspalt 52 erstreckt. Der Bohnenleitkanal 53 hat eine rotationssymmetrische, etwa hutförmige Gestalt und enthält einen Ringraum 54, der rotationssymmetrisch zur Drehachse der Antriebswelle 18 ausgebildet und angeordnet ist. Der Ringraum 54 weist einen ersten Bereich 54a auf, der sich im wesentlichen geradlinig und mit konstanter Ringweite zwischen dem Einfülltrichter 8 und dem Träger 50 erstreckt, wobei jedoch der Abstand des Ringraums 54 von der Drehachse der Antriebswelle 18 von oben nach unten zunimmt. Der erste Bereich 54a mündet mit einem Übergangsradius in einen sich im wesentlichen bezüglich der Antriebswelle 18 radial nach außen erstreckenden, zweiten Bereich 54b und von dort in den Mahlspalt 52.

Der Ringraum 54 wird von außen durch eine im wesentlichen hutförmige Wandung und von innen durch einen vom Träger 50 nach oben hin spitz zulaufenden Leitkörper 55 begrenzt. Der Leitkörper 55 kann, wie in Fig. 8 auf der linken Seite gezeichnet, sich nach oben hin konstant verjüngen und in einer Lockerungswelle 55a auslaufen. Es ist jedoch auch möglich, wie auf der rechten Seite der Fig. 8 gezeigt, den Leitkörper 55 mit einem die Kaffeebohnen 26 nach außen abweisenden, rotätionssymmetrischen Leitvorsprung 56 zu versehen. Durch den im oberen Bereich des Bohnenleitkanals 53 angeordneten Leitvorsprung werden die Kaffeebohnen 26 frühzeitig nach außen abgelenkt und in Rotation um die Antriebsachse versetzt. Selbstverständlich sind die beiden Ausgestaltungen des Leitkegels 55 nur aus Gründen der Übersichtlichkeit gemeinsam in Fig. 8 eingetragen.

Darüber hinaus ist der Ringraum 54 relativ eng, um eine möglichst ungehinderte Einwirkung der Zentrifugalkraft auf jede einzelne Kaffeebohne sicherzustellen. Selbstverständlich muß der Ringraum jedoch so groß sein, daß die Kaffeebohnen nicht hähgenbleiben können.

Der untere, radial nach außen weisende Bereich 54b des Bohnenleitkanals 53 steht mit dem Mahlspalt 52 über eine Mehrzahl im Umfangsabstand zueinander angeordneter Öffnungen 57 in Verbindung, die jeweils entgegen Förderrrichtung schräg verlaufen, wobei insbesondere die seitlichen Bereiche 57a der Öffnungen 57 als Leitflächen ausgebildet sind und die Kaffeebohnen 26 schräg nach außen leiten. Jede Bohne, die entlang der Leitfläche 57a nach außen in den Bereich der mit gleicher Drehzahl mitlaufenden Vorbrechzähne der unteren Mahlscheibe gelangt, wird durch die Berührung mit den oberen, feststehenden Mahlzähnen abgebremst. Daraus resultiert ein Versatz der entstandenen Bohnenbruchstücke gegenüber dem zweiten Bereich 54b des Ringraums. Insbesondere bei stark schräg verlaufender Bohrung wirkt die der leitfläche 57a gegenüberliegende Wandung 57b als Abweise, falls Bohnenteile vom Mahlwerk in Achsrichtung reflektiert werden. In den Mahlspalt ragende Vorsprünge 57c begünstigen eine zusätzliche, die Mahldauer verkürzende Förderung der Bohnenbruchstücke in Richtung des äußeren Mahlspalts. Durch die Öffnungen 57 wird eine gleichmäßige Verteilung der Kaffeebohnen innerhalb des Mahlraums erreicht und damit ein guter Wirkungsgrad der Mühle sichergestellt.

Auf der den Öffnungen 57 abgewandten Seite des Mahlspaltes 52 ist, wie in den Fig. 8 und 9 ersichtlich, ein ringförmiger Sammelraum 58 für das Kaffeemehl vorgesehen, dessen obere Begrenzungsfläche vom oberen Mahlwerksteil 49b und dessen untere Begrenzungsfläche vom rotierenden Träger 50 des unteren Mahlwerksteils 49a gebildet wird. Am Träger 50 sind mit Umfangsabstand Verteilschaufeln 59 befestigt, die mit dem Träger 50 umlaufen, den Sammelraum 58 durchstreichen und das darin angesammelte Kaffeemehl durch die Auslaßöffnungen 17a nach außen befördern.

Beim Betrieb der Kaffeemaschine 1 mit der Mühle 9' der Fig. 8 und 9 werden die eindosierten Kaffeebohnen 26 durch den rotierenden Bohnenleitkanal 53, insbesondere im unteren Bereich des Ringraums 54b, beschleunigenden Zentrifugalkräften unterworfen, die die Kaffeebohnen zwangsweise und kontinuierlich dem Mahlspalt 52 zuführen. Darüber hinaus bewirken die Zentrifugalkräfte auch im ersten Bereich 54b einen stumpferen Aufprallwinkel der Bohnen auf die sich bewegenden Wände des Ringraums, wodurch die Durchlaufzeit der Bohnen zwishen dem Einfülltrichter und dem Mahlspalt weiter vermindert wird.

In Abwandlung der beschriebenen und gezeichneten Ausführungsbeispiele kann die beschriebene Dosiereinrichtung auch für andere Vorratsbehälter bzw. in Verbindung mit anderen Mahlwerken eingesetzt werden. Auch der Vorratsbehälter mit seinen verstellbaren Trennwänden ist nicht unbedingt nur in Verbindung mit der beschriebenen Dosiereinrichtung bzw. dem beschriebenen Mahlwerk zu verwenden. Die Schließeinrichtung kann stationär ausgebildet und mit einem verdrehbaren Vorratsbehälter kombiniert werden, wobei beim Wechsel der Bohnensorte nur die jeweilige Austrittsöffnung des gewünschten Abteils des Vorratsbehälters über der Durchlaßöffnung der unteren Scheibe steht. Dann wird durch Verdrehen der oberen Scheibe der Durchlaß zur Dosierkammer geöffnet. Kaffeebohnen-Beschleuniger können auch für andere als die gezeichneten Mahlwerke eingesetzt werden. Es ist weiterhin möglich, das erfindungsgemäß ausgebildete Mahlwerk auch für Kaffeemaschinen mit nur einer oder mit mehr als zwei Brüheinrichtungen einzusetzen. Schließlich eignet sich das erfindungsgemäße Mahlwerk auch für Kaffeemaschinen, die nur eine Sorte Kaffee brühen, bei denen eine Kaffeebohnendosierung jedoch aus anderen Gründen zweckmäßig erscheint.

## Patentansprüche

1. Kaffeemaschine (1) mit einer Brüheinrichtung (12a, 12b), einem Vorratsbehälter (3) für Kaffeebohnen (26), einer Dosiereinrichtung (6) für Kaffeebohnen, einem Mahlwerk (19, 49) mit zwei einen Mahlspalt (20, 52) begrenzenden Mahlwerksteilen (19a, 19b, 49a, 49b), die sich mit Mahlgeschwindigkeit um eine Mahlwerksachse relativ zueinander bewegen, und mit einem durch Begrenzungsflächen gebildeten Zuführbereich (21, 22, 54) zum Mahlspalt (20, 52), gekennzeichnet durch einen dem Mahlwerk (19, 49) zugeordneten Zentrifugalkraftverstärker (19a, 19b, 53) zum zwangsweisen Zuführen und Beschleunigen der Kaffeebohnen (26) auf ihrem Weg in den Mahlspalt (20, 52), durch eine Verstärkung der auf die Kaffeebohnen einwirkenden Zentrifugalkraft über die durch die Drehung eines Mahlwerksteils mit Mahlgeschwindigkeit erzeugte Zentrifugalkraft hinaus, wobei der Zentrifugalkraftverstärker durch die Begrenzungsflächen des Zuführbereichs (21, 22, 54) gebildet ist, die um eine im Abstand zu den Begrenzungsfläche angeordnete Achse rotieren und die Kaffeebohnen (26) auf ihrem Weg in den Mahlspalt (20, 52) umgeben.

2. Kaffeemaschine nach Anspruch 1, **dadurch gekennzeichnet**, daß bei einem Mahlwerk (19) mit einer in der Nähe der Mahlwerksachse angeordneten Einfüllöffnung (22) für die Kaffeebohnen und einem von beiden Mahlwerksteilen (19a, 19b) begrenzten, radial nach außen in den Mahlspalt (20) mündenden als Aufnahmeraum ausgebildeten Zuführbereich (21) für die Kaffeebohnen (26) beide Mahlwerksteile (19a, 19b) antreibbar sind, und der Zentrifugalkraftverstärker durch die Mahlwerksteile (19a, 19b) gebildet ist, die gleichsinnig, aber mit unterschiedlichen Geschwindigkeiten umlaufen, wobei eines der Mahlwerksteile (19a) mit einer über Mahlgeschwindigkeit liegenden Geschwindigkeit umläuft.

3. Kaffeemaschine nach Anspruch 2, **dadurch gekennzeichnet**, daß bei einem Mahlwerk (19) mit senkrecht übereinanderliegenden Mahlwerksteilen (19a, 19b) das untere Mahlwerksteil (19a) mit der höheren und das obere Mahlwerksteil (19b) mit der geringeren Geschwindigkeit antreibbar ist.

4. Kaffeemaschine nach Anspruch 2 oder 3, **dadurch gekennzeichnet**, daß die höhere Geschwindigkeit etwa 1400 U/min und die niedrigere Geschwindigkeit etwa 400 bis 700 U/min beträgt.

5. Kaffeemaschine nach einem der Ansprüche 1 bis 4, **dadurch gekennzeichnet**, daß zusätzlich eine Leiteinrichtung (23, 28) für Kaffeebohnen (26) vorgesehen ist, die mit wenigstens einem der Mahlwerksteile (19a, 19b) umläuft.

6. Kaffeemaschine nach Anspruch 5, **dadurch gekennzeichnet**, daß im Aufnahmeraum (21) gegenüber der Einfüllöffnung (22) ein Leitkörper (23, 29) angeordnet ist.

7. Kaffeemaschine nach einem der Ansprüche 5 oder 6, **dadurch gekennzeichnet**, daß die Einfüllöffnung (22) mit einem sich mit dem anliegenden Mahlwerksteil (19b) drehenden, ringförmigen Leitkörper (30) umgeben ist.

8. Kaffeemaschine nach einem der Ansprüche 1 bis 7, **dadurch gekennzeichnet**, daß der Zentrifugalkraftverstärker einen Bohnenleitkanal (53) mit um eine Achse drehbaren Begrenzungswänden enthält, der vor dem Mahlspalt (52) angeordnet ist.

9. Kaffeemaschine nach Anspruch 8, **dadurch gekennzeichnet**, daß der Bohnenleitkanal (53) einen im wesentlichen senkrecht verlaufenden, rotationssymmetrisch um die Drehachse angeordneten Ringraum (54) aufweist, dessen Abstand von der Drehachse sich von oben nach unten vergrößert, wobei der Ringraum (54) im unteren Bereich (54b) radial nach außen in den Mahlspalt (52) mündet.

10. Kaffeemaschine nach Anspruch 8 oder 9, **dadurch gekennzeichnet**, daß die innere Begrenzungsfläche des Ringraums (54) als nach oben spitz zulaufender Leitkegel (55) ausgebildet ist.

11. Kaffeemaschine nach Anspruch 10, **dadurch gekennzeichnet**, daß am Leitkegel (55) ein die Kaffeebohnen (26) nach außen abweisender Leitvorsprung (56) angeordnet ist.

12. Kaffeemaschine nach einem der Ansprüche 8 bis 11, **dadurch gekennzeichnet**, daß der Bohnenleitkanal (53) über mehrere durch Leitflächen (57a) begrenzte Öffnungen (57) mit dem Mahlspalt (52) verbunden ist.

13. Kaffeemaschine nach einem der Ansprüche 8 bis 12, **dadurch gekennzeichnet**, daß bei einem Mahlwerk (49) mit einem feststehenden und einem drehenden Mahlwerksteil (49b, 49a) der Bohnenleitkanal (53) mit dem drehbaren Mahlwerksteil (49a) umläuft.

14. Kaffeemaschine nach einem der Ansprüche 1 bis 13, **dadurch gekennzeichnet**, daß der Vorratsbehälter (3) durch Trennwände (33a bis 33d) in mehrere Abteilungen (3a bis 3d) aufgeteilt ist, wobei jede Abteilung (3a bis 3d) eine eigene Austrittsöffnung (34a bis 34d) am Boden (31b) des Vorratsbehälters (3) aufweist.

15. Kaffeemaschine nach Anspruch 14, **dadurch gekennzeichnet**, daß die Trennwände (33a bis 33d) verstellbar sind.

16. Kaffeemaschine nach Anspruch 14 oder 15, **dadurch gekennzeichnet**, daß den Abteilungen (3a bis 3d) eine gemeinsame Dosiereinrichtung (6) zugeordnet sind.

17. Kaffeemaschine nach einem der Ansprüche 1 bis 16, **dadurch gekennzeichnet**, daß die Dosiereinrichtung (6) wenigstens eine um eine senkrechte Achse drehbare Dosierkammer (37) und eine die Dosierkammer gegenüber dem Vorratsbehälter (3) und dem Mahlwerk (19) abschließende sowie die gewünschte Verbindung herstellende Schließeinrichtung (35, 38) enthält.

18. Kaffeemaschine nach Anspruch 17, **dadurch gekennzeichnet**, daß die Schließeinrichtung (38) zwei übereinanderliegende, relativ zueinander gegen die Kraft einer Feder (40) und zusammen relativ zum Vorratsbehälter (3) und zum Mahlwerk (19) bewegbare Scheiben (38a, 38b) mit jeweils einer Durchgangsöffnung (39a, 39b) aufweist, die gegen die Kraft der Feder (40) fluchtend zueinander ausrichtbar sind.

19. Kaffeemaschine nach einem der Ansprüche 1 bis 18, **dadurch gekennzeichnet**, daß jedem Mahlwerk (19) wenigstens zwei Brüheinrichtungen (12a, 12b) zugeordnet sind, wobei das Mahlwerk (19) wenigstens zwei unabhängig voneinander verschließbare Ausgabeleitungen (11a, 11b) für Kaffeemehl aufweist.

20. Kaffeemaschine nach Anspruch 19, **dadurch gekennzeichnet**, daß die Ausgabeleitungen (11a, 11b) in voneinander beabstandete Öffnungen (17a, 17b) in ein Gehäuse (16) des Mahlwerks (19) münden.

## Claims

1. Coffee machine (1) having an infusing device (12a, 12b), a storage container (3) for coffee beans (26), a metering device (6) for coffee beans, a grinding mill (19, 49) with two grinding mill parts (19a, 19b, 49a, 49b) bounding a grinding gap (20, 52) which move relative to one another about a grinding mill axis at grinding speed, and having an infeed region (21, 22, 54) to the grinding gap (20, 52) formed by boundary surfaces, characterised by a centrifugal force booster (19a, 19b, 53) associated with the grinding mill (19, 49) for the forced feeding and acceleration of the coffee beans (26) on their way into the grinding gap (20, 52), by a strengthening of the centrifugal force acting on the coffee beans beyond the centrifugal force produced by the rotation of a grinding mill part at grinding speed, wherein the centrifugal force booster is formed by the boundary surfaces of the infeed region (21, 22, 54) which rotate about an axis arranged at a distance to the boundary surface and surround the coffee beans (26) on their way into the grinding gap (20, 52).

2. Coffee machine according to Claim 1, characterised in that in a grinding mill (19) having a filling opening (22) for the coffee beans arranged in the vicinity of the grinding mill axis and an infeed region (21) for the coffee beans (26) bounded by both grinding mill parts (19a, 19b) and constructed as a receiving space opening radially outwards into the grinding gap (20), both grinding mill parts (19a, 19b) can be driven and the centrifugal force booster is formed by the grinding mill parts (19a, 19b) which revolve in the same direction but with different speeds, wherein one of the grinding mill parts (19a) revolves at a speed greater than grinding speed.

3. Coffee machine according to Claim 2, characterised in that in a grinding mill (19) having grinding mill parts (19a, 19b) located vertically above one another, the lower grinding mill part (19a) can be driven at the higher and the upper grinding mill part (19b) at the lower speed.

4. Coffee machine according to Claim 2 or 3, characterized in that the higher speed amounts approximately to 1400 rpm and the lower speed to approximately 400 to 700 rpm.

5. Coffee machine according to one of Claims 1 to 4, characterised in that in addition a guide device (23, 28) for coffee beans (26) is provided which revolves with at least one of the grinding mill parts (19a, 19b).

6. Coffee machine according to Claim 5, characterised in that in the receiving space (21) a guide body (23, 29) is arranged opposite the filling opening (22).

7. Coffee machine according to one of Claims 5 or 6, characterised in that the filling opening (22) is surrounded by an annular guide body (30) rotating with the adjoining grinding mill part (19b).

8. Coffee machine according to one of Claims 1 to 7, characterised in that the centrifugal force booster contains a bean guide channel (53) with boundary walls rotatable about an axis which is arranged in front of the grinding gap (52).

9. Coffee machine according to Claim 8, characterised in that the bean guide channel (53) has an annular space (54) extending essentially vertically and arranged in rotationally symmetrical manner about the axis of rotation, the distance of which from the axis of rotation increases from top to bottom, wherein the annular space (54) in the lower region (54b) opens radially outwards into the grinding gap (52).

10. Coffee machine according to Claim 8 or 9, characterised in that the inner boundary surface of the annular space (54) is constructed as a guide cone (55) tapering upwards to a point.

11. Coffee machine according to Claim 10, characterised in that a guide projection (56) deflecting the coffee beans (26) outwardly is arranged on the guide cone (55).

12. Coffee machine according to one of Claims 8 to 11, characterised in that the bean guide channel (53) is connected to the grinding gap (52) through several openings (57) bounded by guide surfaces (57a).

13. Coffee machine according to one of Claims 8 to 12, characterised in that in a grinding mill (49) with a static and a rotating grinding mill part (49b, 49a) the bean guide channel (53) revolves with the rotatable grinding mill part (49a).

14. Coffee machine according to one of Claims 1 to 13, characterised in that the storage container (3) is subdivided by partition walls (33a to 33d) into several compartments (3a to 3d), wherein each compartment (3a to 3d) has an independent exit opening (34a to 34d) on the bottom of the storage container (3).

15. Coffee machine according to Claim 14, characterised in that the partition walls (33a to 33d) are adjustable.

16. Coffee machine according to Claim 14 or 15, characterised in that a common metering device (6) is associated with the compartments (3a to 3d).

17. Coffee machine according to one of Claims 1 to 16, characterised in that the metering device (6) contains at least one metering chamber (37) rotatable about a vertical axis and a closing device (35, 38) sealing the metering chamber with respect to the storage container (3) and the grinding mill (19) as well as establishing the desired connection.

18. Coffee machine according to Claim 17, characterised in that the closing device (38) has two disks (38a, 38b) each with a through opening (39a, 39b) located above one another and movable relative to one another against the force of a spring (40) and together movable relative to the storage container (3) and to the grinding mill (19), which can be oriented in alignment with one another against the force of the spring (40).

19. Coffee machine according to one of Claims 1 to 18, characterised in that at least two infusing devices (12a, 12b) are associated with each grinding mill (19), wherein the grinding mill (19) has at least two discharge conduits (11a, 11b) for ground coffee which can be locked independently of one another.

20. Coffee machine according to Claim 19, characterised in that the discharge conduits (11a, 11b) open into openings (17a, 17b) at a distance from one another in a housing (16) of the grinding mill (19).

## Revendications

1. Cafetière (1) comportant un dispositif d'ébouillantage (12a, 12b), un récipient de stockage (3) pour des grains de café (26), un dispositif de dosage (6) pour des grains de café, un mécanisme de mouture (19, 49) comportant deux éléments broyeurs (19a, 19b, 49a, 49b) qui délimitent une fente de mouture (20, 52) et qui se déplacent l'un par rapport à l'autre, à une vitesse de mouture, autour d'un axe du mécanisme de mouture, ainsi qu'une zone d'introduction (21, 22, 54) définie par des surfaces de délimitation et conduisant à la fente de mouture (20, 52), caractérisée par un amplificateur de force centrifuge (19a, 19b, 53) associé au mécanisme de mouture (19, 49) pour introduire de façon forcée et accélérer les grains de café (26) sur le trajet les amenant dans la fente de mouture (20, 52), par une amplification de la force centrifuge agissant sur les grains de café, au-delà de la force centrifuge produite par la rotation d'un élément broyeur du mécanisme de mouture à la vitesse de mouture, l'amplificateur de force centrifuge étant formé par les surfaces de délimitation de la zone d'introduction (21, 22, 54), qui tournent autour d'un axe disposé à distance des surfaces de délimitation et qui entourent les grains de café (26) sur le trajet les amenant dans la fente de mouture (20, 52).

2. Cafetière selon la revendication 1, caractérisée en ce que, dans le cas d'un mécanisme de mouture (19) comportant une ouverture de remplissage (22) pour les grains de café, disposée au voisinage de l'axe du mécanisme de mouture, et une zone d'introduction (21) pour les grains de café (26) réalisée sous la forme d'un espace de réception, délimitée par les deux éléments broyeurs (19a, 19b) du mécanisme de mouture et débouchant radialement vers l'extérieur dans la fente de mouture (20), les deux éléments broyeurs (19a, 19b) du mécanisme de mouture peuvent être entraînés, et l'amplificateur de force centrifuge est formé par les éléments broyeurs (19a, 19b) du mécanisme de mouture, qui tournent dans le même sens, mais à des vitesses différentes, l'un (19a) des éléments broyeurs du mécanisme de mouture tournant à une vitesse qui dépasse la vitesse de mouture.

3. Cafetière selon la revendication 2, caractérisée en ce que, dans le cas d'un mécanisme de mouture (19) comportant des éléments broyeurs (19a, 19b) superposés en direction verticale, l'élément broyeur inférieur (19a) du mécanisme de mouture est entraîné à la vitesse la plus élevée et l'élément broyeur supérieur (19b) du mécanisme de mouture est entraîné à la vitesse la plus faible.

4. Cafetière selon la revendication 2 ou 3, caractérisée en ce que la vitesse la plus élevée est d'environ 1400 tr/min et la vitesse la plus basse, d'environ 400 à 700 tr/min.

5. Cafetière selon l'une des revendications 1 à 4, caractérisée en ce qu'il est prévu, en plus, un dispositif de guidage (23, 28) pour les grains de café (26), qui tourne avec au moins l'un des éléments broyeurs (19a, 19b) du mécanisme de mouture.

6. Cafetière selon la revendication 5, caractérisée en ce qu'un corps de guidage (23, 29) est disposé dans l'espace de réception (21), en face de l'ouverture de remplissage (22).

7. Cafetière selon l'une des revendications 5 ou 6, caractérisée en ce que l'ouverture de remplissage (22) est entourée d'un corps de guidage (30) de forme annulaire, qui se déplace en rotation avec l'élément broyeur contigu (19b) du mécanisme de mouture.

8. Cafetière selon l'une des revendications 1 à 7, caractérisée en ce que l'amplificateur de force centrifuge contient un canal de guidage de grains (53) qui comporte des parois de délimitation aptes à être entraînées en rotation autour d'un axe et qui est disposé en amont de la fente de mouture (52).

9. Cafetière selon la revendication 8, caractérisée en ce que le canal de guidage de grains (53) présente un espace annulaire (54) qui est disposé suivant une symétrie de révolution autour de l'axe de rotation, en s'étendant essentiellement en direction verticale, et dont la distance le séparant de l'axe de rotation va en augmentant du haut vers le bas, l'espace annulaire (54) débouchant radialement vers l'extérieur dans la fente de mouture (52), dans sa partie inférieure (54b).

10. Cafetière selon la revendication 8 ou 9, caractérisée en ce que la surface de délimitation intérieure de l'espace annulaire (54) est réalisée sous la forme d'un cône de guidage (55) à pointe dirigée vers le haut.

11. Cafetière selon la revendication 10, caractérisée en ce que, sur le cône de guidage (55), est disposée une saillie de guidage (56) rejetant les grains de café (26) vers l'extérieur.

12. Cafetière selon l'une des revendications 8 à 11, caractérisée en ce que le canal de guidage de grains (53) est raccordé à la fente de mouture (52) par l'intermédiaire de plusieurs ouvertures (57) délimitées par des surfaces directrices (57a).

13. Cafetière selon l'une des revendications 8 à 12, caractérisée en ce que, dans le cas d'un mécanisme de mouture (49) comportant un élément broyeur fixe et un élément broyeur rotatif (49b, 49a), le canal de guidage de grains (53) tourne avec l'élément broyeur rotatif (49a) du mécanisme de mouture.

14. Cafetière selon l'une des revendications 1 à 13, caractérisée en ce que le récipient de stockage (3) est divisé en plusieurs compartiments (3a à 3d) par des parois de séparation (33a à 33d), chaque compartiment (3a à 3d) présentant une ouverture de sortie propre (34a à 34d) dans le fond (31b) du récipient de stockage (3).

15. Cafetière selon la revendication 14, caractérisée en ce que les parois de séparation (33a à 33d) sont déplaçables.

16. Cafetière selon la revendication 14 ou 15, caractérisée en ce qu'aux compartiments (3a à 3d), est associé un dispositif de dosage commun (6).

17. Cafetière selon l'une des revendications 1 à 16, caractérisée en ce que le dispositif de dosage (6) contient au moins une chambre de dosage (37), apte à être entraînée en rotation autour d'un axe vertical, et un dispositif de fermeture (35, 38) isolant la chambre de dosage vis-à-vis du récipient de stockage (3) et du mécanisme de mouture (19) et établissant la liaison souhaitée.

18. Cafetière selon la revendication 17, caractérisée en ce que le dispositif de fermeture (38) comporte deux disques (38a, 38b) placés l'un sur l'autre, qui présentent chacun une ouverture de passage (39a, 39b) et qui sont déplaçables l'un par rapport à l'autre à l'encontre de la force d'un ressort (40) et conjointement par rapport au récipient de stockage (3) et au mécanisme de mouture (19), ces disques pouvant être orientés l'un par rapport à l'autre dans une position d'alignement à l'encontre de la force du ressort (40).

19. Cafetière selon l'une des revendications 1 à 18, caractérisée en ce qu'à chaque mécanisme de mouture (19), sont associés au moins deux dispositifs d'ébouillantage (12a, 12b), le mécanisme de mouture (19) comportant au moins deux conduits de distribution (11a, 11b) pour le café moulu, qui peuvent être obturés indépendamment l'un de l'autre.

20. Cafetière selon la revendication 19, caractérisée en ce que les conduits de distribution (11a, 11b) débouchent dans des ouvertures (17a, 17b) situées à distance l'une de l'autre dans un bâti (16) du mécanisme de mouture (19).
